# EUROPÄISCHE PATENTSCHRIFT

(11) **EP 3 051 034 B1**
(45) Veröffentlichungstag und Bekanntmachung des Hinweises auf die Patenterteilung: **29.04.2020**
(21) Anmeldenummer: 15201243.1
(22) Anmeldetag: 18.12.2015
(51) Int. Cl.: E03F 3/04, F16B 2/24, F16B 5/02, E03F 5/06

(54) **ENTWÄSSERUNGSRINNE**
DRAINAGE GUTTER
CANIVEAU

(30) Priorität: 29.01.2015 DE 202015100413 U
(43) Veröffentlichungstag der Anmeldung: 03.08.2016
(73) Patentinhaber: BIRCO GmbH, 76532 Baden-Baden (DE)
(72) Erfinder: Merkel, Christian, 76532 Baden-Baden (DE)
(74) Vertreter: Glück Kritzenberger Patentanwälte PartGmbB

(56) Entgegenhaltungen:
- EP-A1- 0 601 446
- DE-A1- 10 204 102
- DE-C1- 10 201 847
- DE-U1- 9 400 242
- US-A1- 2002 057 945

## Beschreibung

### Technisches Gebiet

Die vorliegende Erfindung betrifft eine Entwässerungsrinne mit einem U-förmigen Rinnenkörper, der einen nach oben hin offenen Einlaufbereich zwischen seinen vertikalen Schenkeln aufweist. Am freien Ende beider vertikaler Schenkel ist jeweils eine Zarge zur Aufnahme einer Rinnenabdeckung ausgebildet, die den Einlaufbereich überdeckt. Eine derartige Rinne ist ein Standarddesign, wobei die Rinnenabdeckung in der Regel durch einen Schraubbolzen an einer mit der Zarge verbundenen Schraubmutter festgelegt wird. Die Befestigung ist hierbei relativ aufwendig zu lösen, so dass eine häufigere Wartung der Rinne, zum Beispiel zu speziellen Zeiten, aufwendig ist.

### Stand der Technik

Aus der DE 102 04 102 A1 ist ein Verschlussmechanismus zum Verbinden der Rinnenabdeckung mit dem Rinnenkörper bekannt, der Bajonettverschlüsse umfasst, die ein relativ zügiges Festlegen und Lösen der Rinnenabdeckung ermöglichen.
Die DE 102 01 847 C1 zeigt eine Rinne, bei der entweder Schraub- oder Bajonettbolzen an einer Rinnenabdeckung festlegbar sind und mit in der Zarge des Rinnenkörpers angeordneten Gewindehülsen oder Bajonettaufnahmen zusammenwirken.
Die G 94 00 242.8 zeigt eine Rinne, bei der ein Verankerungselement mit einem Bajonettansatz ein komplementäres Verrastungselement an einem Bügel hintergreift, der quer zur Rinnenachse unter der Zarge abgestützt ist.
Schließlich zeigt die US 2002/0057945 generell unterschiedliche Arten zur Befestigung einer Rinnenabdeckung auf einem Rinnenkörper.

### Darstellung der Erfindung

Es ist Aufgabe der Erfindung, eine Entwässerungsrinne zu schaffen, die eine möglichst variable und schnell zu bewerkstelligende Befestigung der Rinnenabdeckung an dem Rinnenkörper ermöglicht.

Die Aufgabe wird durch eine Entwässerungsrinne mit den Merkmalen des Anspruchs 1 gelöst. Vorteilhafte Weiterbildungen der Erfindung sind Gegenstand der abhängigen Ansprüche.

Erfindungsgemäß trägt die Zarge vertikal nach oben stehende Befestigungsbolzen, die mit komplementären Befestigungselementen an der Rinnenabdeckung zusammenwirken, um diese an dem Rinnenkörper zu halten. Die Befestigungsbolzen haben hierbei einen Schraubbolzenabschnitt und wenigstens eine - vorzugsweise unterhalb des Schraubbolzenabschnitts angeordnete - Ausnehmung. Die komplementären Befestigungselemente umfassen ein Sicherungselement, das mit wenigstens einem Sicherungsteil in die Ausnehmung des Befestigungsbolzens eingreift.

Diese erfindungsgemäße Lösung hat den Vorteil, dass die Rinnenabdeckung wahlweise mit dem Rinnenkörper verschraubt werden kann und wahlweise über die Ausnehmung und das darin eingreifende Sicherungselement in Art eines Schnellverschlusses festgelegt werden kann. Das Sicherungselement kann zum Beispiel durch einen federelastischen Bügel gebildet sein, der mit seinem Sicherungsteil elastisch in die Ausnehmung des Befestigungsbolzens eingreift und damit formschlüssig die Rinnenabdeckung an dem Befestigungsbolzen und damit an der Zarge und dem Rinnenkörper festlegt.

Dieser formschlüssige Eingriff kann vorteilhafterweise zum Beispiel durch eine Bewegung des Sicherungselements quer zur Achse des Schraubbolzens wieder gelöst werden. Hierfür ist vorzugsweise das Sicherungselement in einer Ausnehmung der Rinnenabdeckung aufgenommen, welche derart dimensioniert ist, dass das Sicherungselement darin quer zur Achse des Befestigungsbolzens bewegbar ist. Dies hat zum einen den Vorteil, dass das Sicherungselement nicht nach oben über die Oberseite der Rinnenabdeckung hervorsteht und damit den darüber laufenden Verkehr behindert oder dabei beschädigt werden kann und zum anderen ist es durch die Dimensionierung der Ausnehmung möglich, das Sicherungselement quer zur Achse des Befestigungsbolzens zu bewegen, um den Formeingriff des Sicherungsteils des Sicherungselements in die Ausnehmung des Befestigungsbolzens zu lösen.

Zusammengefasst hat damit die Erfindung den Vorteil, dass die Rinnenabdeckung durch die erfindungsgemäße Befestigung in ihrer Lage in Längsrichtung der Rinne stabilisiert wird. Sie agiert damit auch als eine Verschiebesicherung.

Durch die Ausbildung des Sicherungselements als Feder oder federelastisches Element kann die erfindungsgemäße Befestigung der Rinnenabdeckung als Schnellverschluss agieren. Zusätzlich ist mittels der Fixierung der Rinnenabdeckung durch die Schraubenmutter an dem Schraubbolzenabschnitt auch eine Vandalismus-/Diebstahlsicherung der Rinnenabdeckung gewährleistet.

In einer einfach zu realisierenden Ausführungsform der Erfindung ist die Ausnehmung des Befestigungsbolzens als eine umlaufende Nut ausgebildet. Das Sicherungselement kann dann in der Art eines Bügels, einer Sicherungsscheibe oder einer Klammer ausgebildet sein, die von einer oder mehreren Seiten oder von gegenüberliegenden Seiten in diese Nut eingreift. Diese Lösung ist zum einen sehr zuverlässig und auf der anderen Seite sehr einfach zu realisieren.

Vorzugsweise ist das Sicherungselement in der Art einer Klammer oder zangenartig ausgebildet, wobei es mit seinen Backen in die Nut eingreift. Auf diese Weise wird das Sicherungselement und damit die Rinnenabdeckung sicher an der Zarge festgelegt.

Es erübrigt sich zu sagen, dass die Zarge in herkömmlicher Weise, zum Beispiel durch Betonanker, in dem Rinnenkörper festgelegt ist. Falls der Rinnenkörper aus Metall besteht, kann die Zarge mit dem Rinnenkörper verschweißt oder verschraubt sein. Vorzugsweise besteht der Rinnenkörper jedoch aus Beton oder Polymerbeton.

Die Befestigungsbolzen können auf unterschiedliche Weise mit der Zarge fest verbunden sein, zum Beispiel verschweißt, gequetscht, vernietet oder verschraubt. Die Verbindung zwischen dem Befestigungsbolzen und der Zarge sollte derart beschaffen sein, dass sie sich im Gebrauch der Entwässerungsrinne nicht löst. Vorzugsweise hat der Befestigungsbolzen ein Basisteil, mit welchem er an der Zarge festgelegt ist.

In einer Ausführungsform der Erfindung ist das Sicherungselement als Sicherungsbügel ausgebildet, der mit wenigstens einem Bügelteil in die Ausnehmung eingreift. Dieser Sicherungsbügel kann dann in der Art einer Sicherungsscheibe in die insbesondere nutförmige Ausnehmung des Befestigungsbolzens eingreifen und damit die Rinnenabdeckung an dem Rinnenkörper festlegen.

Wenn das Sicherungselement aus Federstahl besteht, kann es elastisch sich beim Eingreifen in die Ausnehmung und beim Einschnappen in eine Sicherungsstellung verformen, wobei es dann durch seine elastische Rückstellkraft in seine Sicherungsstellung vorgespannt sein kann.

In einer vorteilhaften Weiterbildung der Erfindung ist ein weiteres komplementäres Befestigungselement durch eine Schraubenmutter gebildet, welche mit dem Schraubbolzenabschnitt des Befestigungsbolzens zusammenwirkt. Auf diese Weise kann, wenn z.B. auf absehbare Zeit keine Wartung oder kein Wechsel der Rinnenabdeckung auf dem Rinnenkörper beabsichtigt ist, die Rinnenabdeckung fest mit dem Befestigungsbolzen verschraubt werden, womit die Rinnenabdeckung in üblicher Weise an dem Rinnenkörper festgelegt, nämlich verschraubt ist.

Vorzugsweise ist an dem Befestigungsbolzen eine kegelförmige Erweiterung von dem Schraubbolzenabschnitt nach unten ausgebildet, unter welcher Erweiterung die Ausnehmung, insbesondere in Form einer Nut, ausgebildet ist. Diese kegelförmige Erweiterung fungiert damit als Rampe. Diese Ausführungsform der Erfindung ermöglicht es damit, die Rinnenabdeckung mit eingesetzten Sicherungselementen auf den Rinnenkörper aufzudrücken, wobei das Sicherungsteil des Sicherungselements dann elastisch durch die kegelförmige Erweiterung nach außen gedrückt wird, bis es anschließend in die unter der Erweiterung liegende Ausnehmung einschnappt, womit es formschlüssig an dem Befestigungsbolzen festgelegt ist. Auf diese Weise lässt sich eine äußerst schnelle Montage der Rinnenabdeckung auf dem Rinnenkörper bewerkstelligen.

Es ist vorteilhaft, wenn der Schraubbolzenabschnitt des Befestigungsbolzens bei aufgesetzter Rinnenabdeckung von der Oberseite der Rinnenabdeckung beabstandet ist, so dass der Schraubbolzenabschnitt nicht nach oben aus der Rinnenabdeckung hervorsteht.

Die Erfindung ermöglicht somit die wahlweise Verwendung einer üblichen Schraubenmutter zur Befestigung der Rinnenabdeckung an dem Rinnenkörper oder die Verwendung eines Sicherungselements, das insbesondere aufgrund seines formschlüssigen Zusammenwirkens mit der Ausnehmung des Befestigungsbolzens schnell und einfach zu montieren und auch schnell wieder zu lösen ist. Es kann somit die Rinnenabdeckung schnell gewechselt oder schnell gegen andere Rinnenabdeckungen ausgetauscht werden, wie dies zum Beispiel bei Flächen mit wechselnden Beanspruchungen erforderlich sein könnte. Zudem ist diese Erfindung insbesondere geeignet für Bereiche, die sehr verschmutzungsanfällig sind, das heißt, in denen eine häufige Wartung, zum Beispiel Reinigung der Entwässerungsrinne, erforderlich ist.

Es versteht sich, dass die oben genannten Ausführungsformen der Erfindung in beliebiger Weise miteinander kombiniert werden können, sofern sich die Ausführungsformen technisch nicht widersprechen.

### Kurze Beschreibung der Zeichnungen

Die Erfindung wird nachfolgend beispielsweise anhand eines Ausführungsbeispiels im Zusammenhang mit der schematischen Zeichnung beschrieben. In dieser zeigen:
- Fig. 1: eine Aufsicht auf eine Entwässerungsrinne mit aufgesetzter Rinnenabdeckung, und
- Fig. 2: einen vertikalen Querschnitt II-II durch die Versickerungsrinne aus Fig. 1.

### Wege zur Ausführung der Erfindung

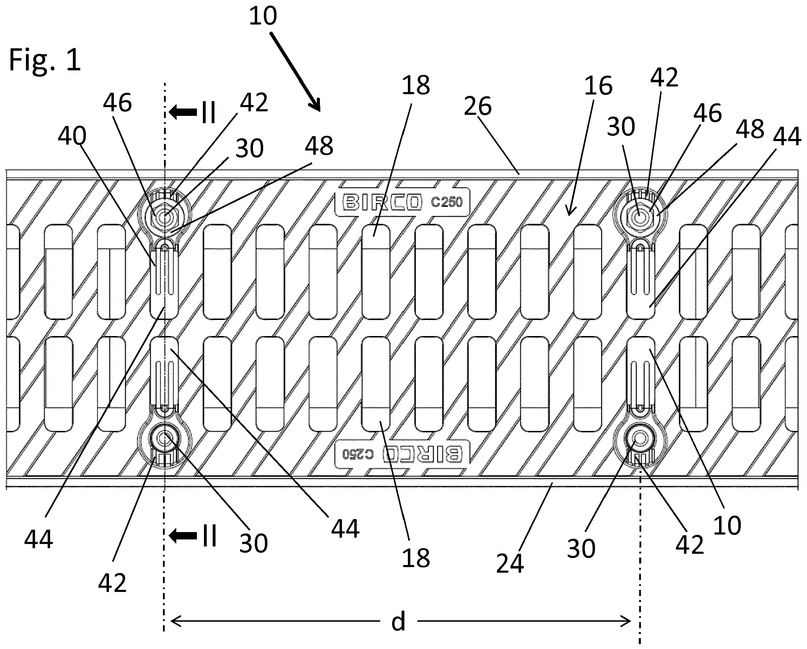

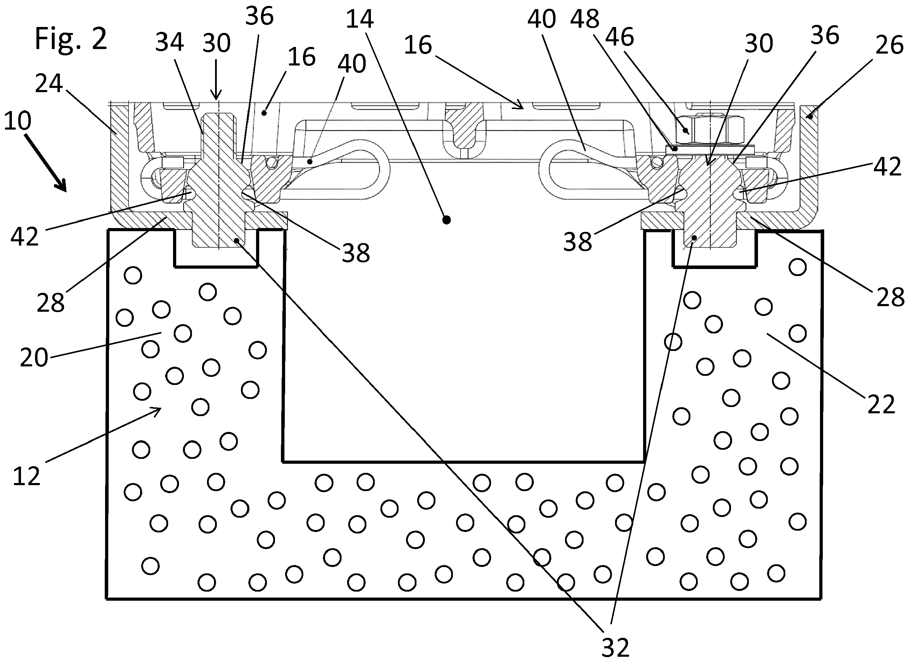

Die Erfindung wird nachfolgend unter gleichzeitiger Bezugnahme auf die Fig. 1 und 2 erläutert. Die erfindungsgemäße Entwässerungsrinne 10 enthält einen U-förmigen Rinnenkörper 12 mit einem nach oben hin offenen Einlaufbereich 14, der von einer Rinnenabdeckung 16 überdeckt ist, der Einlauföffnungen 18 für Regenwasser aufweist. Die beiden vertikalen Schenkel 20, 22 des Rinnenkörpers 12 weisen an ihrem oberen Ende jeweils eine Zarge 24, 26 auf, auf welcher die Rinnenabdeckung 16 aufliegt. In dem horizontalen Schenkel 28 der Zargen 24, 26 sind in einem axialen Abstand d der Rinne 10 Befestigungsbolzen 30 gehalten, die einen Basisteil 32 aufweisen, mit welchem die Befestigungsbolzen 30 an dem horizontalen Schenkel 28 der Zarge 24, 26 festgelegt sind. An ihrem nach oben weisenden freien Ende haben die Befestigungsbolzen 30 einen Schraubbolzenabschnitt 34, auf den nach unten hin eine kegelförmige Erweiterung 36 folgt, die in einer Ringnut 38 endet, die als Ausnehmung für einen Sicherungsbügel 40 dient, der mit einem Sicherungsteil 42 in die Ringnut 38 eingreift. Der Sicherungsbügel 40 ist in einer Ausnehmung 44 der Rinnenabdeckung 16 aufgenommen, so dass er nicht nach oben über die Oberseite der Rinnenabdeckung 16 herausragt. Zudem hat die Ausnehmung 44 der Rinnenabdeckung 16 in der Ebene der Rinnenabdeckung 16 und quer zur Rinnenachse eine größere Länge als die des Sicherungsbügels 40, so dass der Bügel 40 zur Rinnenmitte bewegt werden kann, wobei dann der Sicherungsteil 42 des Sicherungsbügels 40 von seinem Eingriff mit der Umlaufnut 38 des Befestigungsbolzens 30 gelöst wird, was eine schnelle Loslösung der Rinnenabdeckung 16 vom Rinnenkörper 12 ermöglicht. Zudem ist als weiteres komplementäres Befestigungselement eine Schraubenmutter 46 vorgesehen, die im Zusammenwirken mit einer Unterlegscheibe 48 auf den Schraubbolzenabschnitt 34 des Befestigungsbolzens 30aufschraubbar ist. Die Unterlegscheibe 48 liegt auf einer entsprechenden Ausnehmung an der Oberseite der Rinnenabdeckung 16 an, womit die Rinnenabdeckung 16 sehr fest und sicher an dem Rinnenkörper 12 festgelegt ist. Die vorliegende Erfindung ermöglicht somit die Festlegung der Rinnenabdeckung 16 an den Zargen 24, 26 des Rinnenkörpers 12 entweder über die Sicherungsbügel 40 schnell montierbar und schnell lösbar, als auch über die Schraubenmutter 46 sehr dauerhaft und nur vergleichsweise langsam lösbar.

Die kegelförmige Erweiterung 36 hat den Vorteil, dass die Sicherungsbügel schon vor Aufsetzen der Rinnenabdeckung 16 auf den Rinnenkörper 12 in die Ausnehmungen 44 der Rinnenabdeckung 16 eingesetzt werden können. Die Sicherungsbügel 40 bestehen aus Federstahl. Wenn nun die Rinnenabdeckung 16 mit den eingesetzten Sicherungsbügeln 40 auf die Zargen 24, 26 und damit auf die Befestigungsbolzen 30 aufgedrückt wird, gleiten die Sicherungsteile 42 des Sicherungsbügels 40 an dem Schraubbolzenabschnitt 34 und anschließend an der kegelförmigen Erweiterung 36 entlang, wobei sie elastisch nach außen ausgelenkt werden, bis sie in die ringförmige Umlaufnut 38 des Befestigungsbolzens 30 einschnappen, was dann der Fall ist, wenn die Rinnenabdeckung 16 mit ihrer Unterseite auf den horizontalen Schenkeln 28 der Zargen 24, 26 aufliegt. Für die Montage der Rinnenabdeckung 16 ist somit keine horizontale Bewegung der Sicherungsbügel 40 in den Ausnehmungen 44 der Rinnenabdeckung 16 notwendig, sondern die Rinnenabdeckung kann mit eingesetzten Sicherungsbügeln schnell und einfach auf den Rinnenkörper 12 bzw. die darauf befestigten Zargen 24, 26 aufgedrückt werden. Die Montage ist daher äußerst einfach und schnell und zugleich sicher.

Es ist für den Fachmann offensichtlich, dass die beschriebenen Ausführungsformen den Gegenstand der Erfindung nicht begrenzen, sondern dieser kann innerhalb des Schutzbereichs der nachfolgenden Ansprüche variiert werden.

### Bezugszeichenliste

- 10: Entwässerungsrinne
- 12: Rinnenkörper
- 14: Einlaufbereich
- 16: Rinnenabdeckung
- 18: Einlauföffnung
- 20: erster vertikaler Schenkel des Rinnenkörpers
- 22: zweiter vertikaler Schenkel des Rinnenkörpers
- 24: erste Zarge
- 26: zweite Zarge
- 28: horizontaler Zargenschenkel
- 30: Befestigungsbolzen
- 32: Basisteil des Befestigungsbolzens
- 34: Schraubbolzenabschnitt des Befestigungsbolzens
- 36: kegelförmige Erweiterung
- 38: Ausnehmung des Befestigungsbolzens
- 40: Sicherungselement (erstes komplementäres Befestigungselement)
- 42: Sicherungsteil des Sicherungselements
- 44: Ausnehmung der Rinnenabdeckung
- 46: Schraubenmutter (zweites komplementäres Befestigungselement)
- 48: Unterlegscheibe

## Patentansprüche

1. Entwässerungsrinne (10) mit einem U-förmigen Rinnenkörper (12), und einer Rinnenabdeckung (16), wobei der Rinnenkörper (12) einen nach oben hin offenen Einlaufbereich (14) zwischen seinen vertikalen Schenkeln (20, 22) aufweist, wobei am freien Ende beider Schenkel jeweils eine Zarge (24, 26) zur Aufnahme der Rinnenabdeckung (16) der Entwässerungsrinne ausgebildet ist,
**dadurch gekennzeichnet, dass**
die Zarge vertikal nach oben stehende Befestigungsbolzen (30) trägt, die mit komplementären Befestigungselementen an der Rinnenabdeckung zusammenwirken, um die Rinnenabdeckung auf dem Rinnenkörper zu halten, welche Befestigungsbolzen (30) einen Schraubbolzenabschnitt (34) und wenigstens eine Ausnehmung (38) aufweisen, und welche komplementären Befestigungselemente (40, 46) ein Sicherungselement (40) umfassen, das mit wenigstens einem Sicherungsteil (42) in die Ausnehmung (38) des Befestigungsbolzens (30) eingreift, so dass die Rinnenabdeckung (16) wahlweise über die Ausnehmung (38) und das darin eingreifende Sicherungselement (40) in Art eines Schnellverschlusses am Rinnenkörper (12) festgelegt werden kann, und/oder mit dem Rinnenkörper (12) verschraubt werden kann.

2. Entwässerungsrinne (10) nach Anspruch 1, bei welcher das Sicherungselement (40) in einer Ausnehmung (44) der Rinnenabdeckung (16) aufgenommen ist, so welche derart dimensioniert ist, dass das Sicherungselement darin quer zur Achse des Befestigungsbolzens (30) bewegbar ist.

3. Entwässerungsrinne (10) nach einem der vorherigen Ansprüche, bei welcher die Ausnehmung (38) des Befestigungsbolzens (30) unterhalb des Schraubbolzenabschnitts (34) angeordnet ist.

4. Entwässerungsrinne (10) nach einem der vorherigen Ansprüche, bei welcher die Ausnehmung (38) des Befestigungsbolzens (30) als umlaufende Nut des Befestigungsbolzens (30) ausgebildet ist.

5. Entwässerungsrinne (10) nach Anspruch 4, bei welcher das Sicherungselement (40) in Art einer Klammer oder Zange ausgebildet ist und mit seinen Backen in die Nut (38) eingreift.

6. Entwässerungsrinne (10) nach einem der vorherigen Ansprüche, bei welcher das Sicherungselement (40) als Sicherungsbügel ausgebildet ist, der mit wenigstens einem Bügelteil (42) in die Ausnehmung (38) des Befestigungsbolzens (30) eingreift.

7. Entwässerungsrinne (10) nach einem der vorherigen Ansprüche, bei welcher das Sicherungselement (40) aus Federstahl besteht.

8. Entwässerungsrinne (10) nach einem der vorherigen Ansprüche, bei welcher ein weiteres komplementäres Befestigungselement (46) durch eine Schraubenmutter gebildet ist, welches mit dem Schraubbolzenabschnitt (34) des Befestigungsbolzens (30) zusammenwirkt.

9. Entwässerungsrinne (10) nach einem der vorherigen Ansprüche, bei welcher der Befestigungsbolzen (30) eine kegelförmige Erweiterung (36) von dem Schraubbolzenabschnitt (34) nach unten aufweist, unter welcher Erweiterung (36) die Ausnehmung (38), insbesondere in Form einer Nut, ausgebildet ist.

10. Entwässerungsrinne (10) nach Anspruch 9, bei welcher das Sicherungselement (40) aus einem elastischen Material gebildet ist, wobei von dem Sicherungselement wenigstens ein Sicherungsteil (42) beim Aufdrücken auf den Befestigungsbolzen (30) von oben an der Erweiterung (36) zunehmend elastisch ausgelenkt wird, bis es anschließend in die unter der Erweiterung liegende Ausnehmung (38) schnappt.

## Claims

1. Drainage channel (10) with a U-shaped channel body (12), and a channel cover (16), wherein the channel body (12) has an upwardly open inlet region (14) between its vertical legs (20, 22), wherein a respective frame (24, 26) for receiving the channel cover (16) of the drainage channel is formed at the free end of both legs,
**characterised in that**
the frame carries vertically upstanding fastening bolts (30) which cooperate with complementary fastening elements on the gutter cover to retain the gutter cover on the gutter body, which fastening bolts (30) have a bolt portion (34) and at least one recess (38), and which complementary fastening elements (40, 46) comprise a securing element (40), which engages with at least one securing part (42) in the recess (38) of the fastening bolt (30), so that the gutter cover (16) can be selectively fixed to the gutter body (12) in the manner of a quick-release fastener via the recess (38) and the securing element (40) engaging therein and/or can be screwed to the gutter body (12).

2. Drainage channel (10) according to claim 1, in which the securing element (40) is received in a recess (44) of the channel cover (16), which is dimensioned in such a way that the securing element is movable therein transversely to the axis of the fastening bolt (30).

3. Drainage channel (10) according to one of the previous claims, in which the recess (38) of the fastening bolt (30) is arranged below the screw bolt section (34)

4. Drainage channel (10) according to one of the previous claims, in which the recess (38) of the fastening bolt (30) is formed as a circumferential groove of the fastening bolt (30).

5. Drainage channel (10) according to claim 4, in which the securing element (40) is designed in the manner of a clamp or pliers and engages with its jaws in the groove (38).

6. Drainage channel (10) according to one of the previous claims, in which the securing element (40) is designed as a securing bracket which engages with at least one bracket part (42) in the recess (38) of the fastening bolt (30).

7. Drainage channel (10) according to one of the previous claims, in which the securing element (40) consists of spring steel.

8. Drainage channel (10) according to one of the previous claims, in which a further complementary fastening element (46) is formed by a screw nut, which cooperates with the screw bolt section (34) of the fastening bolt (30).

9. Drainage channel (10) according to one of the previous claims, in which the fastening bolt (30) has a conical extension (36) from the screw bolt section (34) downwards, under which extension (36) the recess (38), in particular in the form of a groove, is formed.

10. Drainage channel (10) according to claim 9, in which the securing element (40) is formed from a resilient material, wherein at least one securing part (42) of the securing element is increasingly resiliently deflected by the securing element when pressed onto the fastening bolt (30) from above at the widened portion (36) until it subsequently snaps into the recess (38) lying under the widened portion.

## Revendications

1. Caniveau de drainage (10) avec un corps de caniveau (12) en forme de U et un couvercle de caniveau (16), le corps de caniveau (12) présentant entre ses branches verticales (20, 22) une zone d'entrée (14) ouverte vers le haut, un châssis (24, 26) étant formé à l'extrémité libre des deux branches pour recevoir le couvercle de caniveau (16) du caniveau de drainage,
**caractérisé en ce que**
le châssis porte des boulons de fixation verticaux (30) qui coopèrent avec des éléments de fixation complémentaires sur le couvercle de caniveau pour maintenir le couvercle de caniveau sur le corps de caniveau, lesquels boulons de fixation (30) présentent une partie de boulon filetée (34) et au moins un évidement (38), et lesquels éléments de fixation complémentaires (40, 46) comprennent un élément de retenue (40) qui s'engage par au moins une partie de retenue (42) dans l'évidement (38) du boulon de fixation (30), de telle sorte que le couvercle de caniveau (16) peut, au choix, être fixé sur le corps de caniveau (12) à la manière d'un raccord rapide au moyen de l'évidement (38) et de l'élément de retenue (40) qui s'y engage et/ou être vissé avec le corps de caniveau (12).

2. Caniveau de drainage (10) selon la revendication 1, dans lequel l'élément de retenue (40) est reçu dans un évidement (44) du couvercle de caniveau (16) qui est dimensionné de telle sorte que l'élément de retenue puisse y être déplacé transversalement à l'axe du boulon de fixation (30).

3. Caniveau de drainage (10) selon l'une des revendications précédentes, dans lequel l'évidement (38) du boulon de fixation (30) est disposé sous la partie de boulon filetée (34).

4. Caniveau de drainage (10) selon l'une des revendications précédentes, dans lequel l'évidement (38) du boulon de fixation (30) est réalisé sous la forme d'une rainure circonférentielle du boulon de fixation (30).

5. Caniveau de drainage (10) selon la revendication 4, dans lequel l'élément de retenue (40) est réalisé à la manière d'un clip ou d'une pince et s'engage avec ses mâchoires dans la rainure (38).

6. Caniveau de drainage (10) selon l'une des revendications précédentes, dans lequel l'élément de retenue (40) est réalisé sous la forme d'un étrier de retenue qui s'engage avec au moins une partie d'étrier (42) dans l'évidement (38) du boulon de fixation (30).

7. Caniveau de drainage (10) selon l'une des revendications précédentes, dans lequel l'élément de retenue (40) est constitué d'acier à ressort.

8. Caniveau de drainage (10) selon l'une des revendications précédentes, dans lequel un autre élément de fixation complémentaire (46) est formé par un écrou qui coopère avec la partie de boulon filetée (34) du boulon de fixation (30).

9. Caniveau de drainage (10) selon l'une des revendications précédentes, dans lequel le boulon de fixation (30) présente un élargissement conique depuis la partie de boulon filetée (34) vers le bas, sous lequel élargissement (36) est réalisé l'évidement (38), en particulier sous la forme d'une rainure.

10. Caniveau de drainage (10) selon la revendication 9, dans lequel l'élément de retenue (40) est formé d'un matériau élastique, au moins une partie de retenue (42) de l'élément de retenue étant de plus en plus déviée élastiquement lorsqu'elle est pressée sur le boulon de fixation (30) depuis le haut au niveau de l'élargissement (36) jusqu'à venir s'encliqueter ensuite dans l'évidement (38) situé sous l'élargissement.
